# EUROPEAN PATENT APPLICATION

(11) **EP 4 518 426 A1**
(43) Date of publication of application: **05.03.2025**
(21) Application number: 22939148.7
(22) Date of filing: 28.04.2022
(51) Int. Cl.: H04W 36/00

(54) **NEGOTIATION METHOD, APPARATUS, AND DEVICE AND STORAGE MEDIUM**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Dehns Germany Partnerschaft mbB
(86) International application number: PCT/CN2022/090090
(87) International publication number: WO 2023/206298

(57) **Abstract**

The present disclosure provides a negotiation method, apparatus, and device, and a storage medium, which belong to the technical field of communications. A source node sends a request message to a target node, wherein the request message is used for requesting, from the target node, configuration information of at least one target cell and/or target cell group used for at least one mobility management operation, and receiving a feedback message sent by the target node. Therefore, the embodiments of the present disclosure provide a negotiation method, which is used for negotiating "configuration information of a candidate cell and/or candidate cell group" between the source node and the target node, so as to ensure that the understanding of configuration information of at least one candidate cell and/or candidate cell group configured to a user equipment by the source node and the target node is consistent.

## Description

### TECHNICAL FIELD

The present disclosure relates to the field of communication technologies, and particularly relates to a negotiation method, apparatus and device, and a storage medium.

### BACKGROUND

In a communication system, a source node usually configures configuration information of a candidate cell and/or a candidate cell group for a user equipment (UE), so that when the UE subsequently receives an activation signaling, selective activation of a cell group may be performed according to the configuration information of the candidate cell and/or the candidate cell group.

In related art, a cell and/or a cell group corresponding to the source node may be used as the candidate cell and/or the candidate cell group, and a cell and/or a cell groups corresponding to other nodes may also be used as the candidate cell and/or the candidate cell group. Therefore, before the source node configures the configuration information of the candidate cell and/or the candidate cell group for the UE, the source node is required to negotiate with the other nodes, so that the source node and the other nodes have consistent understanding in the configuration information. Therefore, there is an urgent requirement for a method to realize consistent understanding of a configuration of a selectively activation of cells among a plurality of network nodes.

### SUMMARY

A negotiation method/apparatus/device and a storage medium provided in the present disclosure can be used for negotiating configuration information of a candidate cell and/or a candidate cell group between a source node and a target node.

An aspect of embodiments of the present disclosure provides a negotiation method, which is performed by a source node, and includes:
sending a request message to a target node, in which the request message is used to request configuration information of at least one target cell and/or at least one target cell group for at least one mobility management operation; and
receiving a feedback message sent by the target node.

Optionally, in an embodiment of the present disclosure, the request message includes at least one of:
a handover request message;
a conditional handover (CHO) request message;
a conditional primary secondary cell (PScell) addition (CPA) request message;
a conditional PScell change (CPC) request message;
a request message for requesting to add a candidate cell;
a request message for requesting to add a candidate cell group;
requesting to modify a candidate cell;
requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group.

Optionally, in an embodiment of the present disclosure, the mobility management operation includes at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying a secondary cell group.

Optionally, in an embodiment of the present disclosure, the feedback message includes at least one of:
a response of the target node to the request message, in which the response includes a first rejection response and/or a first acceptance response;
the configuration information of at least one target cell and/or at least one target cell group for at least one mobility management operation; or
a mobility management operation corresponding to the configuration information of at least one target cell and/or at least one target cell group;
in which the configuration information includes at least one of:
a configuration identifier of a target cell;
a configuration identifier of a target cell group;
a cell configuration of a target cell; or
a cell group configuration of a target cell group.

Optionally, in an embodiment of the present disclosure, the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

Optionally, in an embodiment of the present disclosure, in response to the feedback message including the first rejection response, a mobility management operation rejected by the target node is not included in a mobility management operation corresponding to configuration information of the target cell and a mobility management operation corresponding to configuration information of the target cell group in the feedback message.

Optionally, in an embodiment of the present disclosure, in response to the feedback message including the first acceptance response, part or all of a mobility management operation accepted by the target node is included in a mobility management operation corresponding to configuration information of the target cell and a mobility management operation corresponding to configuration information of the target cell group in the feedback message.

Optionally, in an embodiment of the present disclosure, the request message further includes recommendation information of at least one recommended cell and/or at least one recommended cell group for at least one mobility management operation that is recommended by the source node, and the recommendation information includes at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group.

Optionally, in an embodiment of the present disclosure, the feedback message further includes a second rejection response and/or a second acceptance response, in which the second rejection response is used to indicate that the target node rejects part or all of the recommended cell and rejects part or all of the recommended cell group; and the second acceptance response is used to indicate that the target node accepts part or all of the recommended cell and accepts part or all of the recommended cell group.

Optionally, in an embodiment of the present disclosure, in response to the feedback message including the second rejection response, a recommended cell rejected by the target node is not included in the target cell in the feedback message, and a recommended cell group rejected by the target node is not included in the target cell group in the feedback message.

Optionally, in an embodiment of the present disclosure, in response to the feedback message including the second acceptance response, the target cell in the feedback message includes at least one of a part of a recommended cell accepted by the target node, all of the recommended cell accepted by the target node, or another cell of the target node; and the target cell group in the feedback message includes at least one of a part of a recommended cell group accepted by the target node, all of the recommended cell group accepted by the target node, or another cell group of the target node.

Optionally, in an embodiment of the present disclosure, the recommendation information further includes at least one of:
a cell type of the recommended cell; or
a cell group type of the recommended cell group;

Optionally, in an embodiment of the present disclosure, the cell type includes any one of:
a cell of a master cell group (MCG);
a cell of a secondary cell group (SCG);
a primary cell (PCell);
a PSCell;
a special cell (SpCell);
a secondary cell (SCell);
an SCell of an MCG; or
an SCell of an SCG.

Optionally, in an embodiment of the present disclosure, the cell group type includes any one of:
an MCG; or
an SCG.

Optionally, in an embodiment of the present disclosure, the method further includes:
receiving a deletion indication sent by the target node, in which the deletion indication includes at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted.

Optionally, in an embodiment of the present disclosure, the method further includes:
sending a deletion request to the target node, in which the deletion request is used to request the target node to delete at least one target cell and/or at least one target cell group.

Optionally, in an embodiment of the present disclosure, the deletion request includes at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete.

Optionally, in an embodiment of the present disclosure, the method further includes:
updating configuration information of at least one candidate cell and/or at least one candidate cell group that is pre-configured for a user equipment based on the feedback message and/or the deletion indication.

Optionally, in an embodiment of the present disclosure, the source node includes any one of:
a master node (MN); or
a secondary node (SN).

Optionally, in an embodiment of the present disclosure, the target node includes any one of:
an MN; or
an SN.

Optionally, in an embodiment of the present disclosure, the cell configuration of the target cell and/or the cell group configuration of the target cell group are included in a message container.

Another aspect of embodiments of the present disclosure provides a negotiation method, which is performed by a target node, and includes:
receiving a request message sent by a source node, in which the request message is used to request configuration information of at least one target cell and/or at least one target cell group for at least one mobility management operation; and
sending a feedback message to the source node.

Optionally, in an embodiment of the present disclosure, the request message includes at least one of:
a handover request message;
a conditional handover (CHO) request message;
a conditional primary secondary cell (PScell) addition (CPA) request message;
a conditional PScell change (CPC) request message;
a request message for requesting to add a candidate cell;
a request message for requesting to add a candidate cell group;
requesting to modify a candidate cell;
requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group.

Optionally, in an embodiment of the present disclosure, the mobility management operation includes at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying a secondary cell group.

Optionally, in an embodiment of the present disclosure, the feedback message includes at least one of:
a response of the target node to the request message, in which the response includes a first rejection response and/or a first acceptance response;
the configuration information of at least one target cell and/or at least one target cell group for at least one mobility management operation; or
a mobility management operation corresponding to the configuration information of at least one target cell and/or at least one target cell group;
in which the configuration information includes at least one of:
a configuration identifier of a target cell;
a configuration identifier of a target cell group;
a cell configuration of a target cell; or
a cell group configuration of a target cell group.

Optionally, in an embodiment of the present disclosure, the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

Optionally, in an embodiment of the present disclosure, in response to the feedback message including the first rejection response, a mobility management operation rejected by the target node is not included in a mobility management operation corresponding to configuration information of the target cell and a mobility management operation corresponding to configuration information of the target cell group in the feedback message.

Optionally, in an embodiment of the present disclosure, in response to the feedback message including the first acceptance response, part or all of a mobility management operation accepted by the target node is included in a mobility management operation corresponding to configuration information of the target cell and a mobility management operation corresponding to configuration information of the target cell group in the feedback message.

Optionally, in an embodiment of the present disclosure, the request message further includes recommendation information of at least one recommended cell and/or at least one recommended cell group for at least one mobility management operation that is recommended by the source node, and the recommendation information includes at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group.

Optionally, in an embodiment of the present disclosure, the feedback message further includes a second rejection response and/or a second acceptance response, in which the second rejection response is used to indicate that the target node rejects part or all of the recommended cell and rejects part or all of the recommended cell group; and the second acceptance response is used to indicate that the target node accepts part or all of the recommended cell and accepts part or all of the recommended cell group.

Optionally, in an embodiment of the present disclosure, in response to the feedback message including the second rejection response, a recommended cell rejected by the target node is not included in the target cell in the feedback message, and a recommended cell group rejected by the target node is not included in the target cell group in the feedback message.

Optionally, in an embodiment of the present disclosure, in response to the feedback message including the second acceptance response, the target cell in the feedback message includes at least one of a part of a recommended cell accepted by the target node, all of the recommended cell accepted by the target node, or another cell of the target node; and the target cell group in the feedback message includes at least one of a part of a recommended cell group accepted by the target node, all of the recommended cell group accepted by the target node, or another cell group of the target node.

Optionally, in an embodiment of the present disclosure, the recommendation information further includes at least one of:
a cell type of the recommended cell; or
a cell group type of the recommended cell group.

Optionally, in an embodiment of the present disclosure, the cell type includes any one of:
a cell of a master cell group (MCG);
a cell of a secondary cell group (SCG);
a primary cell (PCell);
a PSCell;
a special cell (SpCell);
a secondary cell (SCell);
an SCell of an MCG; or
an SCell of an SCG.

Optionally, in an embodiment of the present disclosure, the cell group type includes any one of:
an MCG; or
an SCG.

Optionally, in an embodiment of the present disclosure, the method further includes:
sending a deletion indication to the target node, in which the deletion indication includes at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted.

Optionally, in an embodiment of the present disclosure, the method further includes:
receiving a deletion request sent by the source node, in which the deletion request is used to request the target node to delete at least one target cell and/or at least one target cell group.

Optionally, in an embodiment of the present disclosure, the deletion request includes at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete.

Optionally, in an embodiment of the present disclosure, the source node includes any one of:
an MN; or
an SN.

Optionally, in an embodiment of the present disclosure, the target node includes any one of:
MN; or
SN.

Optionally, in an embodiment of the present disclosure, the cell configuration of the target cell and/or the cell group configuration of the target cell group are included in a message container.

Another aspect of embodiments of the present disclosure provides a negotiation apparatus. The apparatus includes:
a sending module, configured to send a request message to a target node, in which the request message is used to request configuration information of at least one target cell and/or at least one target cell group for at least one mobility management operation; and
a receiving module, configured to receive a feedback message sent by the target node.

Another aspect of embodiments of the present disclosure provides a negotiation apparatus. The apparatus includes:
a receiving module, configured to receive a request message sent by a source node, in which the request message is used to request configuration information of at least one target cell and/or at least one target cell group for at least one mobility management operation; and
a sending module, configured to send a feedback message to the source node.

Another aspect of embodiments of the present disclosure provides a communication apparatus, including a processor and a memory. The memory stores a computer program, and the processor executes the computer program stored in the memory, to cause the apparatus to execute the method provided by the above aspect of embodiments of the present disclosure.

Another aspect of embodiments of the present disclosure provides a communication apparatus, including a processor and a memory. The memory stores a computer program, and the processor executes the computer program stored in the memory, to cause the apparatus to execute the method provided by the above another aspect of embodiments of the present disclosure.

Another aspect of embodiments of the present disclosure provides a communication apparatus, including a processor and an interface circuit.

The interface circuit is configured to receive a code instruction and transmit the code instruction to the processor.

The processor is configured to run the code instruction to execute the method provided by the above aspect of embodiments.

Another aspect of embodiments of the present disclosure provides a communication apparatus, including a processor and an interface circuit.

The interface circuit is configured to receive a code instruction and transmit the code instruction to the processor.

The processor is configured to run the code instruction to execute the method provided by the above another aspect of embodiments.

Another aspect of embodiments of the present disclosure provides a computer-readable storage medium for storing instructions that, when being executed, cause the method provided by the above aspect of embodiments to be implemented.

Another aspect of embodiments of the present disclosure provides a computer-readable storage medium for storing instructions that, when being executed, cause the method provided by the above another aspect of embodiments to be implemented.

In summary, in the negotiation method/apparatus/device and the storage medium provided in embodiments of the present disclosure, the source node may send the request message to the target node, in which the request message is used to request, from the target node, the configuration information of the at least one target cell and/or the at least one target cell group for the at least one mobility management operation, and then the source node receives the feedback message sent by the target node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment.

### BRIEF DESCRIPTION OF THE DRAWINGS

The above and/or additional aspects and advantages of the present disclosure will become apparent and more readily appreciated from the following descriptions made with reference to the accompanying drawings.
FIG. 1 is a schematic flowchart of a negotiation method according to an embodiment of the present disclosure.
FIG. 2 is a schematic flowchart of a negotiation method according to another embodiment of the present disclosure.
FIG. 3 is a schematic flowchart of a negotiation method according to yet another embodiment of the present disclosure.
FIG. 4a is a schematic flowchart of a negotiation method according to yet another embodiment of the present disclosure.
FIG. 4b is a schematic flowchart of a negotiation method according to yet another embodiment of the present disclosure.
FIG. 5 is a schematic flowchart of a negotiation method according to yet another embodiment of the present disclosure.
FIG. 6 is a schematic flowchart of a negotiation method according to yet another embodiment of the present disclosure.
FIG. 7a is a schematic flowchart of a negotiation method according to yet another embodiment of the present disclosure.
FIG. 7b is a schematic flowchart of a negotiation method according to yet another embodiment of the present disclosure.
FIG. 8 is a schematic structural diagram of a negotiation apparatus according to an embodiment of the present disclosure.
FIG. 9 is a schematic structural diagram of a negotiation apparatus according to another embodiment of the present disclosure.
FIG. 10 is a block diagram of a user equipment according to an embodiment of the present disclosure.
FIG. 11 is a block diagram of a network device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the embodiments of the present disclosure. Instead, they are merely examples of apparatuses and methods consistent with some aspects of the embodiments of the present disclosure as detailed in the appended claims.

Terms used in the embodiments of the present disclosure are merely for the purpose of describing particular embodiments, and are not intended to limit the embodiments of the present disclosure. The singular forms "a/an" and "this" used in the embodiments of the present disclosure and the appended claims are also intended to include plural forms, unless the context clearly indicates other meanings. It should also be understood that the term "and/or" as used herein refers to and includes any or all possible combinations of one or more associated listed items.

It should be understood that although the terms "first", "second", "third", etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" and "whenever" as used herein may be interpreted as "when" or "in a case that" or "in response to determining that".

A negotiation method/apparatus/device and the storage medium provided in the embodiments of the present disclosure are described in detail below with reference to the accompanying drawings.

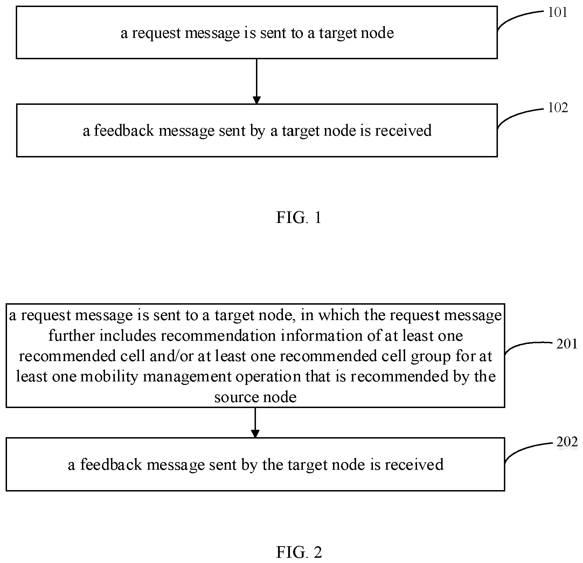

FIG. 1 is a schematic flowchart of a negotiation method according to an embodiment of the present disclosure. The method is performed by a source node, as shown in FIG. 1, the negotiation method may include the following steps.

Step 101: a request message is sent to a target node.

In an embodiment of the present disclosure, the source node may be a node currently providing service to the UE, and the target node may be any node other than the source node, for example, the target node may be a to-be-switched node for the UE.

In an embodiment of the present disclosure, the request message may be used to request configuration information of at least one target cell and/or at least one target cell group for at least one mobility management operation. The target cell may be a cell corresponding to the target node, and the target cell group may be a cell group corresponding to the target node.

Further, in an embodiment of the present disclosure, the request message may include at least one of:
a handover request message (e.g. the handover request message may be sent to the target node by the source node when a conventional handover process is triggered);
a conditional handover (CHO) request message (e.g. the CHO request message may be sent to the target node by the source node when a CHO handover process is triggered);
a conditional primary secondary cell (PScell) addition (CPA) request message (e.g. the CPA request message may be sent to the target node by the source node when a PScell addition process is triggered);
a conditional PSCell change (CPC) request message (e.g. the CPC request message may be sent to the target node by the source node when a PScell change process is triggered);
a request message for requesting to add a candidate cell (e.g. the request message for requesting to add a candidate cell may be sent to the target node by the source node when a candidate cell addition process is triggered);
a request message for requesting to add a candidate cell group (e.g. the request message for requesting to add a candidate cell group may be sent to the target node by the source node when a candidate cell group addition process is triggered);
a request message for requesting to modify a candidate cell (e.g. the request message for requesting to modify a candidate cell may be sent to the target node by the source node when a candidate cell modification process is triggered);
a request message for requesting to modify a candidate cell group (e.g. the request message for requesting to modify a candidate cell group may be sent to the target node by the source node when a candidate cell group modification process is triggered);
a request message for requesting to delete a candidate cell (e.g. the request message for requesting to delete a candidate cell may be sent to the target node by the source node when a candidate cell deletion process is triggered);
a request message for requesting to delete a candidate cell group (e.g. the request message for requesting to delete a candidate cell group may be sent to the target node by the source node when a candidate cell group deletion process is triggered);
a request message for requesting to add a secondary cell group (e.g. the request message for requesting to add a secondary cell group (SCG addition request message) may be sent to the target node by the source node when a secondary cell group addition process is triggered);
a request message for requesting to modify a secondary cell group (e.g. the request message for requesting to modify a secondary cell group may be sent to the target node by the source node when a secondary cell group modification process is triggered); or
a request message for requesting to delete a secondary cell group (e.g. the request message for requesting to delete a secondary cell group may be sent to the target node by the source node when a secondary cell group deletion process is triggered).

In an embodiment of the present disclosure, the mobility management operation may include at least one of:
an indication-based handover (such as a conventional handover);
a CHO;
a CPA;
a CPC;
adding a candidate cell;
adding a candidate cell group;
modifying a candidate cell;
modifying a candidate cell group;
adding a secondary cell group; or
modifying a secondary cell group.

In an embodiment of the present disclosure, the candidate cell and/or the candidate cell group may be pre-configured by the source node for the UE, and the process such as the process of "adding a candidate cell" or "modifying a candidate cell" may be triggered by the source node. For this part of content, reference may be made to the description of the related art.

It should be noted that, in an embodiment of the present disclosure, the above-mentioned request message may be used to request a plurality of mobility management operations.

For example, in an embodiment of the present disclosure, the CHO request message sent by the source node to the target node may be used to request a CHO and an addition of a candidate cell. That is, the CHO request message may request the configuration information of the at least one target cell and/or the at least one target cell group for the CHO and the addition of the candidate cell.

In addition, in another embodiment of the present disclosure, the above-mentioned request message may be used to request a mobility management operation.

For example, in an embodiment of the present disclosure, the CHO request message sent by the source node to the target node may only request the CHO, that is, the CHO request message may only request configuration information of the at least one target cell and/or the at least one target cell group for the CHO. Alternatively, the request message, that is sent by the source node to the target node and used to request an addition of the candidate cell, may only request the addition of the candidate cell. That is, the request message used to request the addition of the candidate cell may only request configuration information of the at least one target cell and/or target cell group of the candidate cell for the addition of the candidate cell.

In an embodiment of the present disclosure, the source node may be any one of:
a master node (MN); or
a secondary node (SN).

Further, in an embodiment of the present disclosure, the target node may be any one of:
an MN; or
an SN.

In an embodiment of the present disclosure, since cell groups corresponding to different nodes are different (for example, the MN corresponds to a master cell group (MCG), and the SN corresponds to a secondary cell group (SCG)), when the source node and the target node are different, the configuration information requested by the request message is also different.

For example, in an embodiment of the present disclosure, when the source node is the MN and the target node is the MN, the request message sent by the source MN to the target MN is used to request configuration information of the cell and/or the cell group under the target node MN ((that is, configuration information of the MCG)).

In another embodiment of the present disclosure, when the source node is an MN and the target node is an SN, the request message sent by the source MN to the target SN is used to request configuration information of the cell and/or the cell group under the target node SN (that is, configuration information of the SCG).

In another embodiment of the present disclosure, when the source node is an SN and the target node is an SN, the request message sent by the source SN to the target SN is used to request configuration information of the cell and/or the cell group under the target node SN (that is, configuration information of the SCG).

In another embodiment of the present disclosure, when the source node is an SN and the target node is an MN, the request message sent by the source SN to the target MN is used to request configuration information of the cell and/or the cell group under the target node MN (that is, configuration information of the MCG).

Step 102: a feedback message sent by a target node is received.

In an embodiment of the present disclosure, the feedback message may include at least one of:
a response of the target node to the request message, in which the response includes a first rejection response and/or a first acceptance response;
the configuration information of at least one target cell and/or at least one target cell group for at least one mobility management operation; or
a mobility management operation corresponding to the configuration information of at least one target cell and/or at least one target cell group.

In an embodiment of the present disclosure, the configuration information may include at least one of:
a configuration identifier of a target cell;
a configuration identifier of a target cell group;
a cell configuration of a target cell (for example, configuration information may be a cell-radio network temporary identifier (C-RNTI) or uplink transmission power); or
a cell group configuration of a target cell group.

In an embodiment of the present disclosure, the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

Based on this, in an embodiment of the present disclosure, when the response of the target node for the request message is different, the content included in the feedback message is also different.

Specifically, in an embodiment of the present disclosure, in response to the feedback message including the first rejection response, it indicates that the target node rejects part or all of the mobility management operation corresponding to the target cell and/or the target cell group requested by the source node, and in this case, the mobility management operation corresponding to the configuration information of the target cell and the mobility management operation corresponding to the configuration information of the target cell group in the feedback message do not include the mobility management operation rejected by the target node.

For example, in an embodiment of the present disclosure, it is assumed that the source node sends a CHO request message to the target node, and the CHO request message is used to request the mobility management operation being the CHO and the addition of the candidate cell. In this case, when the feedback message received by the source node includes the first rejection response, and the first rejection response indicates that the target node rejects the mobility management operation of "adding the candidate cell", the mobility management operation corresponding to the configuration information of the target cell and the mobility management operation corresponding to the configuration information of the target cell group included in the feedback message should not include the addition of the candidate cell.

In another embodiment of the present disclosure, it is assumed that the source node sends the CHO request message to the target node, and the CHO request message is used to request the mobility management operation being the CHO and the addition of the candidate cell. In this case, when the feedback message received by the source node includes the first acceptance response, and the first acceptance response indicates that the target node accepts the mobility management operation of adding the candidate cell, the mobility management operation corresponding to the configuration information of the target cell and the mobility management operation corresponding to the configuration information of the target cell group included in the feedback message should include the addition of the candidate cell.

Further, in an embodiment of the present disclosure, the cell configuration of the target cell and/or the cell group configuration of the target cell group in the feedback message may be included in a message container. Specifically, in an embodiment of the present disclosure, the cell configuration of the target cell and/or the cell group configuration of the target cell group may be carried in an RRCReconfiguration message, and the RRCReconfiguration message may be included in a signaling container (for example, an RRC container) and transmitted through an Xn interface.

In an embodiment of the present disclosure, after receiving the feedback message, the source node may update the configuration information of at least one candidate cell and/or at least one candidate cell group that is pre-configured for a user equipment based on the feedback message, so that the UE may implement selective activation of the cell and/or the cell group based on the configuration information, and this part of content will be described in detail in the subsequent embodiments.

In summary, in the negotiation method provided in the embodiments of the present disclosure, the source node may send the request message to the target node, in which the request message is used to request, from the target node, the configuration information of the at least one target cell and/or the at least one target cell group for the at least one mobility management operation, and then the source node receives the feedback message sent by the target node. It can be seen that the embodiment of the present disclosure provides the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

FIG. 2 is a schematic flowchart of a negotiation method according to an embodiment of the present disclosure, and the method is performed by a source node. As shown in FIG. 2, the negotiation method may include the following steps.

Step 201: a request message is sent to a target node, in which the request message further includes recommendation information of at least one recommended cell and/or at least one recommended cell group for at least one mobility management operation that is recommended by the source node.

In an embodiment of the present disclosure, the recommendation information may include at least one of:
a cell identifier of a recommended cell (for example, a recommended cell # 1);
a cell group identifier of a recommended cell group;
a cell measurement result of a recommended cell (for example, the cell measurement result includes at least one of reference signal received power (RSRP), reference signal received quality (RSRQ), and signal to interference and noise Ratio (SINR);
a cell group measurement result of a recommended cell group;
a cell configuration of a recommended cell (for example, the cell configuration includes at least one of C-RNTI and uplink transmission power); or
a cell group configuration of a recommended cell group.

It should be noted that, in an embodiment of the present disclosure, the recommended cell and/or the recommended cell group may be a cell and/or a cell group corresponding to the target node, and the recommended cell and/or the recommended cell group may be a cell and/or a cell group that the source node whishes the target node to configure.

Further, in an embodiment of the present disclosure, the recommendation information may further include at least one of:
a cell type of the recommended cell; or
a cell group type of the recommended cell group.

In an embodiment of the present disclosure, the cell type includes any one of:
a cell of an MCG;
a cell of an SCG;
a primary cell (PCell);
a primary secondary cell (PSCell);
a special cell (SpCell);
a secondary cell (SCell);
an SCell of an MCG; or
an SCell of an SCG.

In an embodiment of the present disclosure, the cell group type may include any one of:
an MCG; or
an SCG.

Step 202: a feedback message sent by the target node is received.

The detailed content of the feedback message may be described with reference to step 102 in the foregoing embodiments.

In an embodiment, in addition to including the content involved in the above-mentioned step 102, the feedback message may further include a second rejection response and/or a second acceptance response. The second rejection response is used to indicate that the target node rejects part or all of the recommended cell, and rejects part or all of the recommended cell group; and the second acceptance response is used to indicate that the target node accepts part or all of the recommended cell and accepts part or all of the recommended cell group.

Based on this, in an embodiment of the present disclosure, in response to the feedback message including the second rejection response, the target cell in the feedback message does not include a recommended cell rejected by the target node, and the target cell group in the feedback message does not include a recommended cell group rejected by the target node.

For example, in an embodiment of the present disclosure, it is assumed that the source node sends a CPC request message to the target node, and the CPC request message is used to request a mobility management operation being the CPC and the addition of a candidate cell, and the recommendation information in the request message includes a recommended cell # 1 and a recommended cell # 2. In this case, when the feedback message received by the source node includes the second rejection response, and the second rejection response indicates that the target node rejects all of the recommended cell, the target cell in the feedback message does not include the recommended cell rejected by the target node, and another cell of the target node, for example, cell # 3, is included in the target cell in the feedback message.

In another embodiment of the present disclosure, in response to the feedback message including the second acceptance response, the target cell in the feedback message may include at least one of a part of a recommended cell accepted by the target node, all of the recommended cell accepted by the target node, and another cell of the target node; and the target cell group in the feedback message may include at least one of a part of a recommended cell group accepted by the target node, all of the recommended cell group accepted by the target node, or another cell group of the target node.

For example, in an embodiment of the present disclosure, it is assumed that the source node sends a CPC request message to the target node, and the CPC request message is used to request a mobility management operation being a CPC and an addition of a candidate cell, in which the recommendation information in the request message includes a recommended cell # 1 and a recommended cell # 2. In this case, when the feedback message received by the source node includes the second acceptance response and the second acceptance response indicates that the target node accepts the recommended cell # 1 and the recommended cell # 2, the target cell in the feedback message may include only the recommended cell # 2, or may include the recommended cell # 2 and another cell of the target node, such as a cell # 3, or may include the recommended cell # 1 and the recommended cell # 2, or may include the recommended cell # 1, the recommended cell # 2 and another cell of the target node such as the cell # 3.

In summary, in the negotiation method provided in the embodiments of the present disclosure, the source node may send the request message to the target node, in which the request message is used to request, from the target node, the configuration information of the at least one target cell and/or the at least one target cell group for the at least one mobility management operation, and then the source node receives the feedback message sent by the target node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

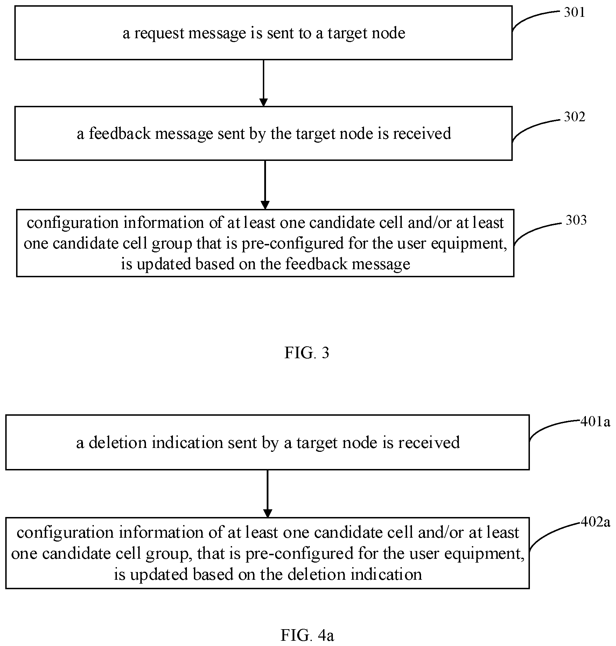

FIG. 3 is a schematic flowchart of a negotiation method according to an embodiment of the present disclosure, and the method is performed by a source node. As shown in FIG. 3, the negotiation method may include the following steps.

Step 301: a request message is sent to a target node.

Step 302: a feedback message sent by the target node is received.

For detailed descriptions of steps 301 to 302, reference may be made to the related descriptions in the foregoing embodiments, and details are not described herein again in the embodiments of the present disclosure.

Step 303: configuration information of at least one candidate cell and/or at least one candidate cell group that is pre-configured for the user equipment, is updated based on the feedback message.

In an embodiment of the present disclosure, the configuration information may include at least one of:
a configuration identifier of a candidate cell;
a configuration identifier of a candidate cell group;
a physical information resource of a candidate cell; or
a physical information resource of a candidate cell group.

In an embodiment of the present disclosure, the updating the configuration information of at least one candidate cell pre-configured for the user equipment based on the feedback message may include:
determining whether the configuration identifier of the target cell in the feedback message exists in the configuration information of the at least one candidate cell. When not existing, the configuration information of the target cell is added to the configuration information of the at least one candidate cell; and when existing, configuration information of a candidate cell that is the same as the configuration identifier of the target cell is modified based on the configuration information of this target cell. For example, the configuration information of the candidate cell that is the same as the configuration identifier of the target cell is replaced by the configuration information of the target cell.

For example, in an embodiment of the present disclosure, it is assumed that the configuration identifier of the target cell included in the feedback message is the target cell # 1, the mobility management operation corresponding to the configuration information of the target cell is an addition of a candidate cell, and the source node determines that the corresponding configuration information of the at least one candidate cell does not include the target cell # 1, then the source node adds the configuration information of the target cell # 1 to the configuration information of the at least one candidate cell.

In another embodiment of the present disclosure, it is assumed that the configuration identifier of the target cell included in the feedback message is the target cell # 1, the mobility management operation corresponding to the configuration information of the target cell is an addition of a candidate cell, and the source node determines that the corresponding configuration information of the at least one candidate cell includes the target cell # 1, then the source node replaces the configuration information of the candidate cell that is the same as the configuration identifier of the target cell # 1 by the configuration information of the target cell # 1 in the feedback message.

In an embodiment of the present disclosure, the updating the configuration information of at least one candidate cell group pre-configured for the user equipment based on the feedback message may include:
determining whether the configuration identifier of the target cell group in the feedback message exists in the configuration information of the at least one candidate cell group. When not existing, the configuration information of the target cell group is added to the configuration information of the at least one candidate cell group. When existing, configuration information of a candidate cell group that is the same as the configuration identifier of the target cell group is modified based on the configuration information of this target cell group. For example, the configuration information of the candidate cell group that is the same as the configuration identifier of the target cell group is replaced by the configuration information of the target cell group.

In summary, in the negotiation method provided in the embodiments of the present disclosure, the source node may send the request message to the target node, in which the request message is used to request, from the target node, the configuration information of at least one target cell and/or at least one target cell group for at least one mobility management operation, and then the source node receives the feedback message sent by the target node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

FIG. 4A is a schematic flowchart of a negotiation method according to an embodiment of the present disclosure. The method is performed by a source node, as shown in FIG. 4A, the negotiation method may include the following steps:

Step 401a: a deletion indication sent by a target node is received.

In an embodiment of the present disclosure, the deletion indication may be sent to the source node, in a case that the target node configures the configuration information of the at least one target cell and/or the at least one target cell group for the source node, and the target node expects to delete part of the target cell and/or the target cell group.

In an embodiment of the present disclosure, the deletion indication may include at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted.

Further, in an embodiment of the present disclosure, since the cell groups corresponding to different nodes are different, when the source node and the target node are different, the configuration information to be deleted that is specifically indicated by the deletion indication is also different.

For example, in one implementation of the present disclosure, when the source node is an MN and the target node is an MN, the source MN receives the deletion instruction sent by the target MN that indicates deletion of the configuration information of the cell and/or the cell group under the source node MN (i.e. the configuration information of the MCG configured by the target MN to the source MN).

In another embodiment of the present disclosure, when the source node is an MN and the target node is an SN, the source MN receives the deletion instruction sent by the target SN that indicates deletion of the configuration information of the cell and/or the cell group under the source node MN (i.e. the configuration information of the SCG configured by the target SN to the source MN).

In another embodiment of the present disclosure, when the source node is an SN and the target node is an SN, the source SN receives the deletion instruction sent by the target SN that indicates deletion of the configuration information of the cell and/or the cell group under the source node SN (i.e. the configuration information of the SCG configured by the target SN to the source SN).

In another embodiment of the present disclosure, when the source node is an SN and the target node is an MN, the source SN receives the deletion instruction sent by the target SN that indicates deletion of the configuration information of the cell and/or the cell group under the source node SN (i.e. the configuration information of the MCG configured by the target MN to the source SN).

Step 402a: configuration information of at least one candidate cell and/or at least one candidate cell group, that is pre-configured for the user equipment, is updated based on the deletion indication.

Specifically, a candidate cell (a candidate cell group) that has the same configuration identifier and/or cell configuration with the target cell (and/or the target cell group) to be deleted in the deletion indication may be deleted from the configuration information of the candidate cell (and/or the candidate cell group).

For example, in an embodiment of the present disclosure, assuming that the configuration identifier of the target cell to be deleted in the received deletion indication sent by the target node is the target cell # 1, the source node deletes the configuration information corresponding to the target cell # 1 from the configuration information of the candidate cell.

In summary, in the negotiation method provided in the embodiments of the present disclosure, the source node may send the request message to the target node, in which the request message is used to request, from the target node, the configuration information of the at least one target cell and/or the at least one target cell group for the at least one mobility management operation, and then the source node receives the feedback message sent by the target node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

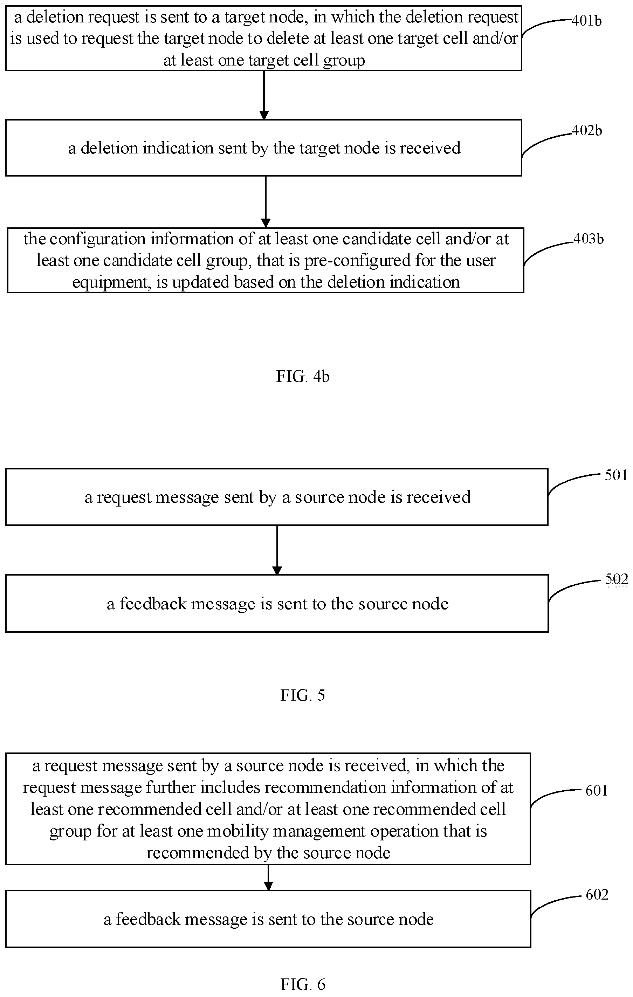

FIG. 4b is a schematic flowchart of a negotiation method according to an embodiment of the present disclosure. The method is performed by a source node, as shown in FIG. 4B, and the negotiation method may include the following steps.

Step 401b: a deletion request is sent to a target node, in which the deletion request is used to request the target node to delete at least one target cell and/or at least one target cell group.

In an embodiment of the present disclosure, the deletion request may include at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete.

In another embodiment of the present disclosure, the deletion request may not include related information of a cell and/or a cell group that the source node expects to delete, but merely requests the target node to delete the target cell and/or the target cell group.

Step 402b: a deletion indication sent by the target node is received.

It should be noted that, in an embodiment of the present disclosure, the target cell to be deleted in the deletion indication may be the same as or different from the target cell that the source node expects to delete in the deletion request; and the target cell group to be deleted in the deletion indication may be the same as or different from the target cell group that the source node expects to delete in the deletion request.

Step 403b: the configuration information of at least one candidate cell and/or at least one candidate cell group, that is pre-configured for the user equipment, is updated based on the deletion indication.

For related descriptions of steps 402b to 403b, reference may be made to the description of the foregoing embodiments, and details are not described herein again in the embodiments of the present disclosure.

In summary, in the negotiation method provided in the embodiments of the present disclosure, the source node may send the request message to the target node, in which the request message is used to request, from the target node, the configuration information of the at least one target cell and/or the at least one target cell group for the at least one mobility management operation, and then the source node receives the feedback message sent by the target node. It can be seen that the embodiments of the present disclosure provide the negotiation method, which is used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

FIG. 5 is a schematic flowchart of a negotiation method according to an embodiment of the present disclosure. The method is performed by a target node, as shown in FIG. 5, and the negotiation method may include the following steps.

Step 501: a request message sent by a source node is received.

In an embodiment of the present disclosure, the source node may be a node currently providing service to the UE, and the target node may be any node other than a node currently providing service to the UE.

In an embodiment of the present disclosure, the request message is used to request configuration information of at least one target cell and/or at least one target cell group for at least one mobility management operation.

In an embodiment of the present disclosure, the request message may include at least one of:
a handover request message;
a CHO request message;
a CPA request message;
a CPC request message;
a request message for requesting to add a candidate cell;
a request message for requesting to add a candidate cell group;
a request message for requesting to modify a candidate cell;
a request message for requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group.

In an embodiment of the present disclosure, the mobility management operation may include at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying the secondary cell group.

It should be noted that, in an embodiment of the present disclosure, the candidate cell and/or the candidate cell group is configured by the source node for the user equipment, so that the UE performs selective activation based on the candidate cell and/or the candidate cell group. In addition, the target cell and the target cell group are respectively corresponding a cells and a cell group under the target node.

In an embodiment of the present disclosure, the source node may be any one of:
an MN; or
an SN.

Further, in an embodiment of the present disclosure, the target node may be any one of:
an MN; or
an SN.

Step 502: a feedback message is sent to the source node.

In an embodiment of the present disclosure, the feedback message may include at least one of:
a response of the target node to the request message, in which the response includes a first rejection response and/or a first acceptance response;
the configuration information of at least one target cell and/or at least one target cell group for at least one mobility management operation; or
a mobility management operation corresponding to the configuration information of at least one target cell and/or at least one target cell group.

In an embodiment of the present disclosure, the configuration information may include at least one of:
a configuration identifier of a target cell;
a configuration identifier of a target cell group;
a cell configuration of a target cell; or
a cell group configuration of a target cell group.

Further, in an embodiment of the present disclosure, the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

In an embodiment of the present disclosure, when the response of the target node for the request message is different, the content included in the feedback message is also different.

In an embodiment of the present disclosure, in response to the feedback message including the first rejection response, it indicates that the target node rejects part or all of the mobility management operation corresponding to the target cell and/or the target cell group requested by the source node, and in this case, the mobility management operation corresponding to the configuration information of the target cell and the mobility management operation corresponding to the configuration information of the target cell group in the feedback message do not include the mobility management operation rejected by the target node.

In another embodiment of the present disclosure, in response to the feedback message including the first acceptance response, the mobility management operation corresponding to the configuration information of the target cell and the mobility management operation corresponding to the configuration information of the target cell group in the feedback message include part or all of the mobility management operation accepted by the target node.

In an embodiment of the present disclosure, the cell configuration of the target cell and/or the cell group configuration of the target cell group in the feedback message may be included in a message container. Specifically, in an embodiment of the present disclosure, the cell configuration of the target cell and/or the cell group configuration of the target cell group may be carried in an RRCReconfiguration message, and the RRCReconfiguration message may be included in a signaling container (for example, an RRC container) and transmitted through an Xn interface.

In an embodiment of the present disclosure, after receiving the feedback message, the source node may update the configuration information of at least one candidate cell and/or at least one candidate cell group that is pre-configured for a user equipment based on the feedback message. This part of content will be described in detail in the subsequent embodiments.

For other detailed descriptions of the foregoing steps 501 to 502, reference may be made to the related descriptions in the foregoing embodiments.

In summary, in the negotiation method provided in the embodiments of the present disclosure, the target node may receive the request message sent by the source node, in which the request message is used to request, from the target node, the configuration information of at least one target cell and/or at least one target cell group for at least one mobility management operation, and then the target node sends the feedback message to the source node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

FIG. 6 is a schematic flowchart of a negotiation method according to an embodiment of the present disclosure. The method is performed by a target node, as shown in FIG. 6, and the negotiation method may include the following steps:

Step 601: a request message sent by a source node is received, in which the request message further includes recommendation information of at least one recommended cell and/or at least one recommended cell group for at least one mobility management operation that is recommended by the source node.

In an embodiment of the present disclosure, the recommendation information may include at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group.

In an embodiment of the present disclosure, the recommendation information may further include at least one of:
a cell type of the recommended cell; or
a cell group type of the recommended cell group.

In an embodiment of the present disclosure, the cell type includes any one of:
a cell of an MCG;
a cell of an SCG;
a primary cell (PCell);
a primary secondary cell (PSCell);
a special cell (SpCell);
a secondary cell (SCell);
an SCell of an MCG; or
an SCell of an SCG.

In an embodiment of the present disclosure, the cell group type may include any one of:
an MCG; or
an SCG.

For other detailed descriptions about the request message, reference may be made to the related description in the foregoing embodiments, and details are not described herein again in the embodiments of the present disclosure.

Step 602: a feedback message is sent to the source node.

For details of the feedback message, refer to step 502 of the foregoing embodiments. In the embodiments, in addition to including the content involved in the above mentioned step 502, the feedback message further includes a second rejection response and/or a second acceptance response. The second rejection response is used to indicate that the target node rejects part or all of the recommended cell, and rejects part or all of the recommended cell group; and the second acceptance response is used to indicate that the target node accepts part or all of the recommended cell and accepts part or all of the recommended cell group.

In an embodiment of the present disclosure, when the response of the target node to the request message is different, the content included in the feedback message is also different.

Specifically, in an embodiment of the present disclosure, in response to the feedback message including the second rejection response, the target cell in the feedback message does not include a recommended cell rejected by the target node, and the target cell group in the feedback message does not include a recommended cell group rejected by the target node.

In another embodiment of the present disclosure, in response to the feedback message including the second acceptance response, the target cell in the feedback message includes at least one of a part of a recommended cell accepted by the target node, all of the recommended cell accepted by the target node, and another cell of the target node; and the target cell group in the feedback message includes at least one of a part of a recommended cell group accepted by the target node, all of the recommended cell group accepted by the target node, or another cell group of the target node.

For other detailed descriptions in the embodiments, reference may be made to the related descriptions in the foregoing embodiments.

In summary, in the negotiation method provided in the embodiments of the present disclosure, the target node may receive the request message sent by the source node, in which the request message is used to request, from the target node, the configuration information of at least one target cell and/or at least one target cell group for at least one mobility management operation, and then the target node sends the feedback message to the source node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

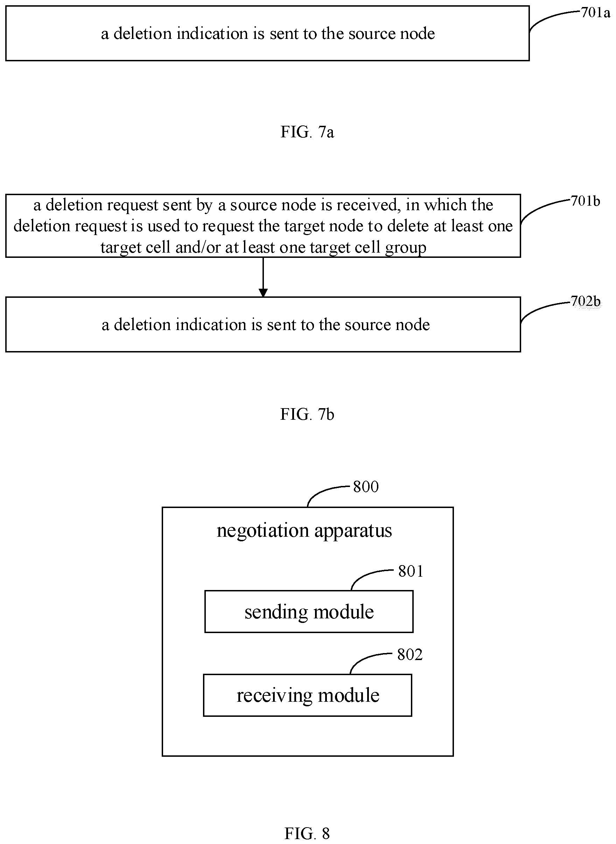

FIG. 7a is a schematic flowchart of a negotiation method according to an embodiment of the present disclosure. The method is performed by a target node, as shown in FIG. 7a, and the negotiation method may include the following steps.

Step 701a: a deletion indication is sent to the source node.

In an embodiment of the present disclosure, the deletion indication may be sent to the source node, in a case that the target node configures the configuration information of the at least one target cell and/or the at least one target cell group for the source node, and the target node expects to delete part of the target cell and/or the target cell group.

In an embodiment of the present disclosure, the deletion indication may include at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted.

For other detailed descriptions in the embodiments, reference may be made to the related descriptions in the foregoing embodiments.

In summary, in the negotiation method provided in the embodiments of the present disclosure, the target node may receive the request message sent by the source node, in which the request message is used to request, from the target node, the configuration information of at least one target cell and/or at least one target cell group for at least one mobility management operation, and then the target node sends the feedback message to the source node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

FIG. 7 B is a schematic flowchart of a negotiation method according to an embodiment of the present disclosure. The method is performed by a target node, as shown in FIG. 7B, and the negotiation method may include the following steps.

Step 701b: a deletion request sent by a source node is received, in which the deletion request is used to request the target node to delete at least one target cell and/or at least one target cell group.

In an embodiment of the present disclosure, the deletion indication may include at least one of:
a configuration identifier of at least one target cell to be deleted;
a configuration identifier of at least one target cell group to be deleted;
configuration information of at least one target cell to be deleted; or
configuration information of at least one target cell group to be deleted.

In another embodiment of the present disclosure, the deletion request may not include related information of a cell and/or a cell group that the source node expects to delete.

Step 702b: a deletion indication is sent to the source node.

For other detailed descriptions in the embodiments, reference may be made to the related descriptions in the foregoing embodiments.

In summary, in the negotiation method provided in the embodiments of the present disclosure, the target node may receive the request message sent by the source node, in which the request message is used to request, from the target node, the configuration information of at least one target cell and/or at least one target cell group for at least one mobility management operation, and then the target node sends the feedback message to the source node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

FIG. 8 is a schematic structural diagram of a negotiation apparatus according to an embodiment of the present disclosure. As illustrated in FIG. 8, the apparatus includes:
a sending module 801, configured to send a request message to a target node, in which the request message is used to request, from the target node, configuration information of at least one target cell and/or at least one target cell group for at least one mobility management operation; and
a receiving module 802, configured to receive a feedback message sent by the target node.

In summary, in the negotiation apparatus provided in the embodiment of the present disclosure, the source node may send the request message to the target node, in which the request message is used to request, from the target node, the configuration information of the at least one target cell and/or the at least one target cell group for the at least one mobility management operation, and then the source node receives the feedback message sent by the target node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

In an embodiment of the present disclosure, the request message includes at least one of:
a handover request message;
a CHO request message;
a CPA request message;
a CPC request message;
a request message for requesting to add a candidate cell;
a request message for requesting to add a candidate cell group;
requesting to modify a candidate cell;
requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group

Optionally, in an embodiment of the present disclosure, the mobility management operation includes at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying a secondary cell group

Optionally, in an embodiment of the present disclosure, the feedback message includes at least one of:
a response of the target node to the request message, in which the response includes a first rejection response and/or a first acceptance response;
the configuration information of at least one target cell and/or at least one target cell group for at least one mobility management operation; or
a mobility management operation corresponding to the configuration information of at least one target cell and/or at least one target cell group.

The configuration information includes at least one of:
a configuration identifier of a target cell;
a configuration identifier of a target cell group;
a cell configuration of a target cell; or
a cell group configuration of a target cell group.

Optionally, in an embodiment of the present disclosure, the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

Optionally, in an embodiment of the present disclosure, in response to the feedback message including the first rejection response, a mobility management operation rejected by the target node is not included in a mobility management operation corresponding to configuration information of the target cell and a mobility management operation corresponding to configuration information of the target cell group in the feedback message.

Optionally, in an embodiment of the present disclosure, in response to the feedback message including the first acceptance response, part or all of a mobility management operation accepted by the target node is included in a mobility management operation corresponding to configuration information of the target cell and a mobility management operation corresponding to configuration information of the target cell group in the feedback message.

Optionally, in an embodiment of the present disclosure, the request message further includes recommendation information of at least one recommended cell and/or at least one recommended cell group for at least one mobility management operation that is recommended by the source node, and the recommendation information includes at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group

Optionally, in an embodiment of the present disclosure, the feedback message further includes a second rejection response and/or a second acceptance response, in which the second rejection response is used to indicate that the target node rejects part or all of the recommended cell and rejects part or all of the recommended cell group; and the second acceptance response is used to indicate that the target node accepts part or all of the recommended cell and accepts part or all of the recommended cell group.

Optionally, in an embodiment of the present disclosure, in response to the feedback message including the second rejection response, a recommended cell rejected by the target node is not included in the target cell in the feedback message, and a recommended cell group rejected by the target node is not included in the target cell group in the feedback message.

Optionally, in an embodiment of the present disclosure, in response to the feedback message including the second acceptance response, the target cell in the feedback message includes at least one of a part of a recommended cell accepted by the target node, all of the recommended cell accepted by the target node, or another cell of the target node; and the target cell group in the feedback message includes at least one of a part of a recommended cell group accepted by the target node, all of the recommended cell group accepted by the target node, or another cell group of the target node.

Optionally, in an embodiment of the present disclosure, the recommendation information further includes at least one of:
a cell type of the recommended cell; or
a cell group type of the recommended cell group.

The cell type includes any one of:
a cell of an MCG;
a cell of an SCG;
a PCell;
a PSCell;
an SpCell;
an SCell;
an SCell of an MCG; or
an SCell of an SCG;

The cell group type includes any one of:
an MCG; or
an SCG.

Optionally, in an embodiment of the present disclosure, the apparatus is further configured to:
receive a deletion indication sent by the target node, in which the deletion indication includes at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted

Optionally, in an embodiment of the present disclosure, the apparatus is further configured to:
send a deletion request to the target node, in which the deletion request is used to request the target node to delete at least one target cell and/or at least one target cell group.

Optionally, in an embodiment of the present disclosure, the deletion request includes at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete

Optionally, in an embodiment of the present disclosure, the apparatus is further configured to:
update configuration information of at least one candidate cell and/or at least one candidate cell group that is pre-configured for a user equipment based on the feedback message and/or the deletion indication.

Optionally, in an embodiment of the present disclosure, the source node includes any one of:
an MN; or
an SN.

Optionally, in an embodiment of the present disclosure, the target node includes any one of:
an MN; or
an SN.

Optionally, in an embodiment of the present disclosure, the cell configuration of the target cell and/or the cell group configuration of the target cell group are included in a message container.

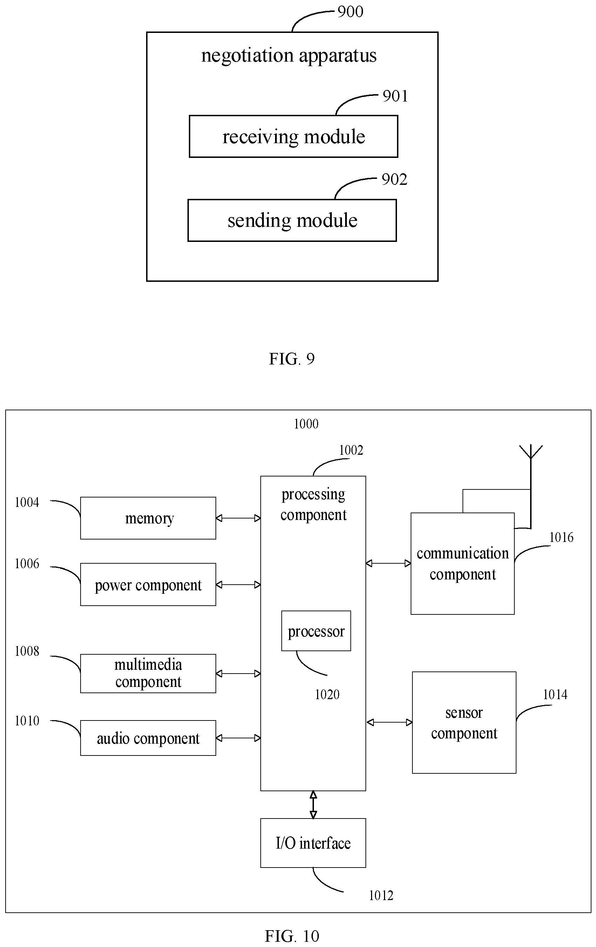

FIG. 9 is a schematic structural diagram of a negotiation apparatus according to an embodiment of the present disclosure. As illustrated in FIG. 9, the apparatus includes:
a receiving module 901, configured to receive a request message sent by a source node, in which the request message is used to request configuration information of at least one target cell and/or at least one target cell group for at least one mobility management operation; and
a sending module 902, configured to send a feedback message to the source node.

In summary, in the negotiation apparatus provided in the embodiments of the present disclosure, the target node may receive the request message sent by the source node, in which the request message is used to request, from the target node, the configuration information of at least one target cell and/or at least one target cell group for at least one mobility management operation, and then the target node sends the feedback message to the source node. It can be seen that the embodiments of the present disclosure provide the negotiation method used for negotiating configuration information of a candidate cell and/or a candidate cell group between the source node and the target node, so as to ensure that the source node and the target node have consistent understanding in the configuration information of at least one candidate cell and/or at least one candidate cell group that is configured for the user equipment. After the CG connected to the UE changes, the UE can directly activate or deactivate the candidate cell and/or the candidate cell group based on receiving the activation signaling and the configuration information without reconfiguring the configuration of the cell to be activated, thereby reducing the signaling overhead.

Optionally, in an embodiment of the present disclosure, the request message includes at least one of:
a handover request message;
a CHO request message;
a CPA request message;
a CPC request message;
a request message for requesting to add a candidate cell;
a request message for requesting to add a candidate cell group;
requesting to modify a candidate cell;
requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group.

Optionally, in an embodiment of the present disclosure, the mobility management operation includes at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying a secondary cell group

Optionally, in an embodiment of the present disclosure, the feedback message includes at least one of:
a response of the target node to the request message, in which the response includes a first rejection response and/or a first acceptance response;
the configuration information of at least one target cell and/or at least one target cell group for at least one mobility management operation; or
a mobility management operation corresponding to the configuration information of at least one target cell and/or at least one target cell group.

The configuration information includes at least one of:
a configuration identifier of a target cell;
a configuration identifier of a target cell group;
a cell configuration of a target cell; or
a cell group configuration of a target cell group.

Optionally, in an embodiment of the present disclosure, the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

Optionally, in an embodiment of the present disclosure, in response to the feedback message including the first rejection response, a mobility management operation rejected by the target node is not included in a mobility management operation corresponding to configuration information of the target cell and a mobility management operation corresponding to configuration information of the target cell group in the feedback message.

Optionally, in an embodiment of the present disclosure, in response to the feedback message including the first acceptance response, part or all of a mobility management operation accepted by the target node is included in a mobility management operation corresponding to configuration information of the target cell and a mobility management operation corresponding to configuration information of the target cell group in the feedback message.

Optionally, in an embodiment of the present disclosure, the request message further includes recommendation information of at least one recommended cell and/or at least one recommended cell group for at least one mobility management operation that is recommended by the source node, and the recommendation information includes at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group

Optionally, in an embodiment of the present disclosure, the feedback message further includes a second rejection response and/or a second acceptance response, in which the second rejection response is used to indicate that the target node rejects part or all of the recommended cell and rejects part or all of the recommended cell group; and the second acceptance response is used to indicate that the target node accepts part or all of the recommended cell and accepts part or all of the recommended cell group.

Optionally, in an embodiment of the present disclosure, in response to the feedback message including the second rejection response, a recommended cell rejected by the target node is not included in the target cell in the feedback message, and a recommended cell group rejected by the target node is not included in the target cell group in the feedback message.

Optionally, in an embodiment of the present disclosure, in response to the feedback message including the second acceptance response, the target cell in the feedback message includes at least one of a part of a recommended cell accepted by the target node, all of the recommended cell accepted by the target node, or another cell of the target node; and the target cell group in the feedback message includes at least one of a part of a recommended cell group accepted by the target node, all of the recommended cell group accepted by the target node, or another cell group of the target node.

Optionally, in an embodiment of the present disclosure, the recommendation information further includes at least one of:
a cell type of the recommended cell; or
a cell group type of the recommended cell group.

The cell type includes any one of:
a cell of an MCG;
a cell of an SCG;
a PCell;
a PSCell;
an SpCell;
an SCell;
an SCell of an MCG; or
an SCell of an SCG.

The cell group type includes any one of:
an MCG; or
an SCG.

Optionally, in an embodiment of the present disclosure, the apparatus is further configured to:
send a deletion indication to the target node, in which the deletion indication includes at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted.

Optionally, in an embodiment of the present disclosure, the apparatus is further configured to:
receive a deletion request sent by the source node, in which the deletion request is used to request the target node to delete at least one target cell and/or at least one target cell group.

Optionally, in an embodiment of the present disclosure, the deletion request includes at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete.

Optionally, in an embodiment of the present disclosure, the apparatus is further configured to:
update the configuration information of at least one candidate cell and/or at least one candidate cell group, that is pre-configured to a user equipment, based on the feedback message and/or the deletion indication.

Optionally, in an embodiment of the present disclosure, the source node includes any one of:
an MN; or
an SN.

Optionally, in an embodiment of the present disclosure, the target node includes any one of:
an MN; or
an SN.

Optionally, in an embodiment of the present disclosure, the cell configuration of the target cell and/or the cell group configuration of the target cell group are included in a message container.

FIG. 10 is a block diagram of a user equipment UE 1000 according to an embodiment of the present disclosure. For example, the UE 1000 may be a mobile phone, a computer, a digital broadcast terminal device, a messaging device, a game console, a tablet device, a medical device, a fitness device, a personal digital assistant, and the like.

Referring to FIG. 10, the UE 1000 may include at least one of: a processing component 1002, a memory 1004, a power component 1006, a multimedia component 1008, an audio component 1010, an input/output (I/O) interface 1012, a sensor component 1013, and a communication component 1016

The processing component 1002 typically controls overall operations of the UE 1000, such as operations associated with display, telephone calls, data communications, camera operations, and recording operations. The processing component 1002 may include at least one processor 1020 to execute instructions to perform all or part of the steps in the foregoing methods. Moreover, the processing component 1002 may include at least one module that facilitates interaction between the processing component 1002 and other components. For example, the processing component 1002 may include a multimedia module to facilitate interaction between the multimedia component 1008 and the processing component 1002.

The memory 1004 is configured to store various types of data to support the operation of the UE 1000. Examples of such data include instructions, contact data, phonebook data, messages, pictures, videos, etc. for any application or method operating on UE 1000. The memory 1004 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1006 provides power to various components of the UE 1000. The power component 1006 may include a power management system, at least one power supply, and other components associated with generating, managing, and distributing power for the UE 1000.

The multimedia component 1008 includes a screen providing an output interface between the UE 1000 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also detect a wake-up time and a pressure associated with the touch or swipe action. In some embodiments, the multimedia component 1008 includes a front camera and/or a rear camera. When the UE 1000 is in an operation mode, such as a photographing mode or a video mode, the front camera and/or the rear camera may receive external multimedia data. Each of the front camera and the rear camera may be a fixed optical lens system or have focal length and optical zoom capability.

The audio component 1010 is configured to output and/or input audio signals. For example, the audio component 1010 includes a microphone (MIC) configured to receive an external audio signal when the UE 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and the peripheral interface module, and the peripheral interface module may be a keyboard, a click wheel, a button, and the like. The buttons may include, but are not limited to, a home button, a volume button, a starting button, and a locking button.

The sensor component 1013 includes at least one sensor for providing status assessments of various aspects of the UE 1000. For example, the sensor component 1013 may detect an on/off state of the device 1000, relative positioning of the component, e.g. the component is a display and a keypad of the UE 1000, the sensor component 1013 may also detect a change in position of one component of the UE 1000 or the UE 1000, presence or absence of contact by the user with the UE 1000, orientation of the UE 1000 or acceleration/deceleration, and temperature change of the UE 1000. The sensor component 1013 may include a proximity sensor configured to detect the presence of nearby objects without any physical contact. The sensor component 1013 may also include a light sensor, such as a CMOS or CCD image sensor, for use in imaging applications. In some embodiments, the sensor component 1013 may further include an acceleration sensor, a gyroscope sensor, a magnetic sensor, a pressure sensor, or a temperature sensor.

The communication component 1016 is configured to facilitate wired or wireless communication between the UE 1000 and other devices. The UE 1000 may access a wireless network based on a communication standard, such as WiFi, 2G, or 3G, or a combination thereof. In an exemplary embodiment, the communication component 1016 receives a broadcast signal or broadcast associated information from an external broadcast management system via a broadcast channel. In an exemplary embodiment, the communication component 1016 further includes a near field communication (NFC) module to facilitate short-range communications. For example, the NFC module may be implemented based on a radio frequency identification (RFID) technology, an infrared data association technology, an ultra-wideband (UWB) technology, a bluetooth (BT) technology, and other technologies.

In an exemplary embodiment, the UE 1000 may be implemented by at least one application specific integrated circuit (ASIC), digital signal processor (DSP), digital signal processing device (DSPD), programmable logic device (PLD), field programmable gate array (FPGA), controller, microcontroller, microprocessor, or other electronic components for performing the methods described above.

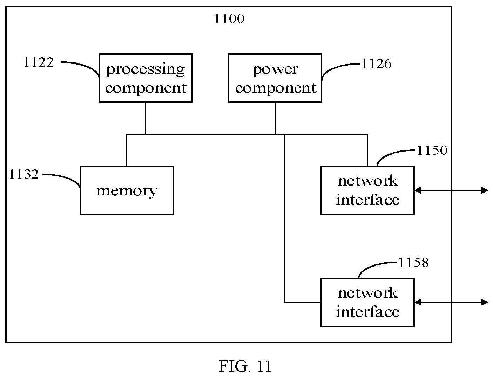

FIG. 11 is a block diagram of a network device 1100 according to an embodiment of the present disclosure. For example, the network device 1100 may be provided as a network device. Referring to FIG. 11, the network device 1100 includes a processing component 1111, which further includes at least one processor and memory resources represented by the memory 1132, and is configured to store instructions, such as an application, executable by the processing component 1122. The application program stored in the memory 1132 may include one or more modules each corresponding to a set of instructions. In addition, the processing component 1111 is configured to execute instructions to perform any method of the foregoing methods applied to the network device, for example, as shown in FIG. 1.

The network device 1100 may further include a power component 1126 configured to perform power management of the network device 1100, a wired or wireless network interface 1150 configured to connect the network device 1100 to the network, and an input/output (I/O) interface 1158. The network device 1100 may operate an operating system stored in the memory 1132, such as Windows Server^{™}, MAC OS X^{™}, Unix^{™}, Linux^{™}, FreeBSD^{™}, or the like.

In the foregoing embodiments provided in the present disclosure, the methods provided in the embodiments of the present disclosure are separately described from the perspective of the network device and the UE. To implement the functions in the methods provided in the foregoing embodiments of the present disclosure, the network device and the UE may include a hardware structure and a software module, to implement the foregoing functions in a form of a hardware structure, a software module, or a hardware structure plus software module. A function in the foregoing functions may be performed by using a hardware structure, a software module, or a hardware structure plus a software module.

In the foregoing embodiments provided in the present disclosure, the methods provided in the embodiments of the present disclosure are separately described from the perspective of the network device and the UE. To implement the functions in the method provided in the foregoing embodiments of the present disclosure, the network device and the UE may include a hardware structure and a software module, to implement the foregoing functions in a form of a hardware structure, a software module, or a hardware structure plus software module. A function in the foregoing functions may be performed by using a hardware structure, a software module, or a hardware structure plus a software module.

An embodiment of the present disclosure provides a communication apparatus. The communication apparatus may include a transceiver module and a processing module. The transceiver module may include a sending module and/or a receiving module, the sending module is configured to implement a sending function, and the receiving module is configured to implement a receiving function, and the transceiver module may implement a sending function and/or a receiving function.

The communications apparatus may be a terminal device (for example, the terminal device in the foregoing method embodiments), an apparatus in the terminal device, or an apparatus that can be used by matching with the terminal device. Alternatively, the communication apparatus may be a network device, an apparatus in the network device, or an apparatus that can be used to match the network device.

An embodiment of the present disclosure provides another communication apparatus. The communications apparatus may be a network device, or may be a terminal device (for example, a terminal device in the foregoing method embodiments), a chip, a chip system, a processor, or the like that supports the network device to implement the foregoing methods, or may be a chip, a chip system, a processor, or the like that supports the terminal device to implement the foregoing methods. The apparatus may be configured to implement the methods described in the foregoing method embodiments, for details, refer to the descriptions in the foregoing method embodiments.

The communication apparatus may include one or more processors. The processor may be a general-purpose processor, a dedicated processor, or the like. The baseband processor or the central processing unit may be, for example, a baseband processor or a central processing unit. The baseband processor may be configured to process a communication protocol and communication data, and the central processing unit may be configured to control the communication apparatus (for example, a network device, a baseband chip, a terminal device, a terminal device chip, a DU, or a CU), execute a computer program, and process data of the computer program.

Optionally, the communication apparatus may further include one or more memories. A computer program may be stored on the one or more memories, and the processor executes the computer program, so that the communication apparatus performs the methods described in the foregoing method embodiments. Optionally, the memory may further store data. The communication apparatus and the memory may be separately disposed, or may be integrated together.

Optionally, the communications apparatus may further include a transceiver and an antenna. The transceiver may be referred to as a transceiver unit, a transceiver machine, a transceiver circuit, or the like, and is configured to implement a transceiver function. The transceiver may include a receiver and a transmitter, the receiver may be referred to as a receiver or a receiving circuit, and is configured to implement a receiving function; and the transmitter may be referred to as a transmitter or a transmitting circuit, and is configured to implement a transmitting function.

Optionally, the communications apparatus may further include one or more interface circuits. The interface circuit is configured to receive a code instruction and transmit the code instruction to the processor. The processor runs the code instruction to cause the communication apparatus to perform the methods described in the foregoing method embodiments.

The communications apparatus is a terminal device (for example, the terminal device in the foregoing method embodiments): the processor is configured to perform the method shown in any one of FIG. 1 to FIG. 4.

The communication apparatus is a network device: the transceiver is configured to perform the method shown in any one of FIG. 5 to FIG. 7.

In an implementation, the processor may include a transceiver configured to implement a receiving and sending function. For example, the transceiver may be a transceiver circuit, an interface, or an interface circuit. The transceiver circuit, the interface, or the interface circuit configured to implement the receiving and sending functions may be separate, or may be integrated together. The transceiver circuit, the interface, or the interface circuit may be configured to read/write code/data, or the transceiver circuit, the interface, or the interface circuit may be configured to transmit or transmit a signal.

In an implementation, the processor may store a computer program, and the computer program runs on the processor, so that the communication apparatus may perform the method described in the foregoing method embodiments. The computer program may be cured in a processor, in which case the processor may be implemented by hardware.

In an implementation, the communications apparatus may include a circuit, and the circuit may implement a function of sending or receiving or communicating in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, and the like. The processor and the transceiver may also be fabricated using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communications apparatus in the foregoing embodiments may be a network device or a terminal device (for example, the terminal device in the foregoing method embodiments), but the scope of the communications apparatus described in the present disclosure is not limited thereto, and the structure of the communications apparatus may not be limited. The communication device may be a standalone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

For the case that the communication apparatus may be a chip or a chip system, the chip includes a processor and an interface. There may be one or more processors, and there may be a plurality of interfaces.

Optionally, the chip further includes a memory, and the memory is configured to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

An embodiment of the present disclosure further provides a system for determining a sidelink duration, in which the system includes a communications apparatus that serves as a terminal device (for example, the first terminal device in the foregoing method embodiments) and a communications apparatus that serves as a network device in the foregoing embodiments, or the system includes a communications apparatus that serves as a terminal device (for example, the first terminal device in the foregoing method embodiments) and a communications apparatus that serves as a network device in the foregoing embodiments.

The present disclosure also provides a readable storage medium having instructions stored thereon. When the instructions are executed by a computer, the function of any of the method embodiments described above is implemented.

The present disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first" , "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the invention will be readily apparent to those skilled in the art from consideration of the specification and practice of the invention disclosed herein. The present disclosure is intended to cover any variations, uses, or adaptations of the invention that follow the general principles of the present disclosure and include common sense or customary technical means in the technical field that are not disclosed in the present disclosure. It is intended that the specification and embodiments be considered as exemplary only, with a true scope and spirit of the present disclosure being indicated by the following claims.

It is to be understood that the present disclosure is not limited to the precise structures described above and illustrated in the accompanying drawings, and various modifications and changes may be made without departing from the scope thereof. The scope of the disclosure is limited only by the appended claims.

## Claims

1. A negotiation method, performed by a source node, comprising:
sending a request message to a target node, wherein the request message is used to request configuration information of at least one target cell and/or at least one target cell group for at least one mobility management operation; and
receiving a feedback message sent by the target node.

2. The method according to claim 1, wherein the request message comprises at least one of:
a handover request message;
a conditional handover (CHO) request message;
a conditional primary secondary cell (PScell) addition (CPA) request message;
a conditional PScell change (CPC) request message;
a request message for requesting to add a candidate cell;
a request message for requesting to add a candidate cell group;
requesting to modify a candidate cell;
requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group.

3. The method according to claim 1, wherein the mobility management operation comprises at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying a secondary cell group.

4. The method according to claim 1, wherein the feedback message comprises at least one of:
a response of the target node to the request message, wherein the response comprises a first rejection response and/or a first acceptance response;
the configuration information of at least one target cell and/or at least one target cell group for at least one mobility management operation; or
a mobility management operation corresponding to the configuration information of at least one target cell and/or at least one target cell group;
wherein the configuration information comprises at least one of:
a configuration identifier of a target cell;
a configuration identifier of a target cell group;
a cell configuration of a target cell; or
a cell group configuration of a target cell group.

5. The method according to claim 4, wherein the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

6. The method according to claim 5, wherein in response to the feedback message comprising the first rejection response, a mobility management operation rejected by the target node is not comprised in a mobility management operation corresponding to configuration information of the target cell and a mobility management operation corresponding to configuration information of the target cell group in the feedback message.

7. The method according to claim 5, wherein in response to the feedback message comprising the first acceptance response, part or all of a mobility management operation accepted by the target node is comprised in a mobility management operation corresponding to configuration information of the target cell and a mobility management operation corresponding to configuration information of the target cell group in the feedback message.

8. The method according to any one of claims 4-6, wherein the request message further comprises recommendation information of at least one recommended cell and/or at least one recommended cell group for at least one mobility management operation that is recommended by the source node, and the recommendation information comprises at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group.

9. The method according to claim 8, wherein the feedback message further comprises a second rejection response and/or a second acceptance response, wherein the second rejection response is used to indicate that the target node rejects part or all of the recommended cell and rejects part or all of the recommended cell group; and the second acceptance response is used to indicate that the target node accepts part or all of the recommended cell and accepts part or all of the recommended cell group.

10. The method according to claim 9, wherein in response to the feedback message comprising the second rejection response, a recommended cell rejected by the target node is not comprised in the target cell in the feedback message, and a recommended cell group rejected by the target node is not comprised in the target cell group in the feedback message.

11. The method according to claim 9, wherein in response to the feedback message comprising the second acceptance response, the target cell in the feedback message comprises at least one of a part of a recommended cell accepted by the target node, all of the recommended cell accepted by the target node, or another cell of the target node; and the target cell group in the feedback message comprises at least one of a part of a recommended cell group accepted by the target node, all of the recommended cell group accepted by the target node, or another cell group of the target node.

12. The method according to claim 8, wherein the recommendation information further comprises at least one of:
a cell type of the recommended cell; or
a cell group type of the recommended cell group;
wherein the cell type comprises any one of:
a cell of a master cell group (MCG);
a cell of a secondary cell group (SCG);
a primary cell (PCell);
a PSCell;
a special cell (SpCell);
a secondary cell (SCell);
an SCell of an MCG; or
an SCell of an SCG;
wherein the cell group type comprises any one of:
an MCG; or
an SCG.

13. The method according to claim 4, further comprising:
receiving a deletion indication sent by the target node, wherein the deletion indication comprises at least one of:
a configuration identifier of at least one target cell to be deleted;
a configuration identifier of at least one target cell group to be deleted;
a cell configuration of at least one target cell to be deleted; or
a cell group configuration of at least one target cell group to be deleted.

14. The method according to claim 13, further comprising:
sending a deletion request to the target node, wherein the deletion request is used to request the target node to delete at least one target cell and/or at least one target cell group.

15. The method according to claim 14, wherein the deletion request comprises at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete.

16. The method according to claim 4 or 13, further comprising:
updating configuration information of at least one candidate cell and/or at least one candidate cell group that is pre-configured for a user equipment based on the feedback message and/or the deletion indication.

17. The method according to claim 1, wherein the source node comprises any one of:
a master node (MN); or
a secondary node (SN).

18. The method according to claim 1, wherein the target node comprises any one of:
an MN; or
an SN.

19. The method according to claim 4, wherein the cell configuration of the target cell and/or the cell group configuration of the target cell group is comprised in a message container.

20. A negotiation method, performed by a target node, comprising:
receiving a request message sent by a source node, wherein the request message is used to request configuration information of at least one target cell and/or at least one target cell group for at least one mobility management operation; and
sending a feedback message to the source node.

21. The method according to claim 20, wherein the request message comprises at least one of:
a handover request message;
a conditional handover (CHO) request message;
a conditional primary secondary cell (PScell) addition (CPA) request message;
a conditional PScell change (CPC) request message;
a request message for requesting to add a candidate cell;
a request message for requesting to add a candidate cell group;
requesting to modify a candidate cell;
requesting to modify a candidate cell group;
a request message for requesting to delete a candidate cell;
a request message for requesting to delete a candidate cell group;
a request message for requesting to add a secondary cell group;
a request message for requesting to modify a secondary cell group; or
a request message for requesting to delete a secondary cell group.

22. The method according to claim 20, wherein the mobility management operation comprises at least one of:
an indication-based handover;
a CHO;
a CPA;
a CPC;
adding a candidate cell;
adding a candidate cell group;
modifying a candidate cell;
modifying a candidate cell group;
adding a secondary cell group; or
modifying a secondary cell group.

23. The method according to claim 22, wherein the feedback message comprises at least one of:
a response of the target node to the request message, wherein the response comprises a first rejection response and/or a first acceptance response;
the configuration information of at least one target cell and/or at least one target cell group for at least one mobility management operation; or
a mobility management operation corresponding to the configuration information of at least one target cell and/or at least one target cell group;
wherein the configuration information comprises at least one of:
a configuration identifier of a target cell;
a configuration identifier of a target cell group;
a cell configuration of a target cell; or
a cell group configuration of a target cell group.

24. The method according to claim 23, wherein the first rejection response is used to indicate that the target node rejects part or all of a mobility management operation corresponding to the target cell and/or the target cell group requested by the source node; and the first acceptance response is used to indicate that the target node accepts part or all of the mobility management operation corresponding to the target cell and/or the target cell group requested by the source node.

25. The method according to claim 24, wherein in response to the feedback message comprising the first rejection response, a mobility management operation rejected by the target node is not comprised in a mobility management operation corresponding to configuration information of the target cell and a mobility management operation corresponding to configuration information of the target cell group in the feedback message.

26. The method according to claim 24, wherein in response to the feedback message comprising the first acceptance response, part or all of a mobility management operation accepted by the target node is comprised in a mobility management operation corresponding to configuration information of the target cell and a mobility management operation corresponding to configuration information of the target cell group in the feedback message.

27. The method according to any one of claims 23-25, wherein the request message further comprises recommendation information of at least one recommended cell and/or at least one recommended cell group for at least one mobility management operation that is recommended by the source node, and the recommendation information comprises at least one of:
a cell identifier of a recommended cell;
a cell group identifier of a recommended cell group;
a cell measurement result of a recommended cell;
a cell group measurement result of a recommended cell group;
a cell configuration of a recommended cell; or
a cell group configuration of a recommended cell group.

28. The method according to claim 27, wherein the feedback message further comprises a second rejection response and/or a second acceptance response, wherein the second rejection response is used to indicate that the target node rejects part or all of the recommended cell and rejects part or all of the recommended cell group; and the second acceptance response is used to indicate that the target node accepts part or all of the recommended cell and accepts part or all of the recommended cell group.

29. The method according to claim 28, wherein in response to the feedback message comprising the second rejection response, a recommended cell rejected by the target node is not comprised in the target cell in the feedback message, and a recommended cell group rejected by the target node is not comprised in the target cell group in the feedback message.

30. The method according to claim 28, wherein in response to the feedback message comprising the second acceptance response, the target cell in the feedback message comprises at least one of a part of a recommended cell accepted by the target node, all of the recommended cell accepted by the target node, or another cell of the target node; and the target cell group in the feedback message comprises at least one of a part of a recommended cell group accepted by the target node, all of the recommended cell group accepted by the target node, or another cell group of the target node.

31. The method according to claim 27, wherein the recommendation information further comprises at least one of:
a cell type of the recommended cell; or
a cell group type of the recommended cell group;
wherein the cell type comprises any one of:
a cell of a master cell group (MCG);
a cell of a secondary cell group (SCG);
a primary cell (PCell);
a PSCell;
a special cell (SpCell);
a secondary cell (SCell);
an SCell of an MCG; or
an SCell of an SCG;
wherein the cell group type comprises any one of:
an MCG; or
an SCG.

32. The method according to claim 23, further comprising:
sending a deletion indication to the target node, wherein the deletion indication comprises at least one of:
a configuration identifier of at least one target cell to be deleted;
a configuration identifier of at least one target cell group to be deleted;
configuration information of at least one target cell to be deleted; or
configuration information of at least one target cell group to be deleted.

33. The method according to claim 32, further comprising:
receiving a deletion request sent by the source node, wherein the deletion request is used to request the target node to delete at least one target cell and/or at least one target cell group.

34. The method according to claim 33, wherein the deletion request comprises at least one of:
a configuration identifier of at least one target cell that the source node expects to delete;
a configuration identifier of at least one target cell group that the source node expects to delete;
a cell configuration of at least one target cell that the source node expects to delete; or
a cell group configuration of at least one target cell group that the source node expects to delete.

35. The method according to claim 20, wherein the source node comprises any one of:
a master node (MN); or
a secondary node (SN).

36. The method according to claim 20, wherein the target node comprises any one of:
an MN; or
an SN.

37. The method according to claim 23, wherein the cell configuration of the target cell and/or the cell group configuration of the target cell group is comprised in a message container.

38. A negotiation apparatus, comprising:
a sending module, configured to send a request message to a target node, wherein the request message is used to request configuration information of at least one target cell and/or at least one target cell group for at least one mobility management operation; and
a receiving module, configured to receive a feedback message sent by the target node.

39. A negotiation apparatus, comprising:
a receiving module, configured to receive a request message sent by a source node, wherein the request message is used to request configuration information of at least one target cell and/or at least one target cell group for at least one mobility management operation; and
a sending module, configured to send a feedback message to the source node.

40. A communication apparatus, comprising a processor and a memory, wherein the memory stores a computer program, and the processor executes the computer program stored in the memory, to cause the apparatus to execute the method according to any one of claims 1-19.

41. A communication apparatus, comprising a processor and a memory, wherein the memory stores a computer program, and the processor executes the computer program stored in the memory, to cause the apparatus to execute the method according to any one of claims 20 to 37.

42. A communication apparatus, comprising a processor and an interface circuit, wherein
the interface circuit is configured to receive a code instruction and transmit the code instruction to the processor; and
the processor is configured to run the code instruction to execute the method according to any one of claims 1 to 19.

43. A communication apparatus, comprising a processor and an interface circuit, wherein
the interface circuit is configured to receive a code instruction and transmit the code instruction to the processor; and
the processor is configured to run the code instruction to execute the method according to any one of claims 20 to 37.

44. A computer-readable storage medium for storing instructions that, when being executed, cause the method according to any one of claims 1-19 to be implemented.

45. A computer-readable storage medium for storing instructions that, when being executed, cause the method according to any one of claims 20 to 37 to be implemented.
